# EUROPÄISCHE PATENTSCHRIFT

(11) **EP 1 186 518 B1**
(45) Veröffentlichungstag und Bekanntmachung des Hinweises auf die Patenterteilung: **04.02.2004**
(21) Anmeldenummer: 01120549.9
(22) Anmeldetag: 29.08.2001
(51) Int. Cl.: B62D 33/06, B60R 16/02

(54) **Vormontierte Verkleidungsbaueinheit für eine Fahrzeugkabine**
Pre-assembled cover assembly for a vehicle cabin
Ensemble de carrosserie préassemblé pour la cabine d'un véhicule automobile

(30) Priorität: 07.09.2000 DE 10044175
(43) Veröffentlichungstag der Anmeldung: 13.03.2002
(73) Patentinhaber: DEERE & COMPANY, Moline, Illinois 61265-8098 (US)
(72) Erfinder: Teich, Michael, 68199 Mannheim (DE)
(74) Vertreter: Lau-Loskill, Philipp, Dipl.-Phys.

(56) Entgegenhaltungen:
- EP-A- 0 438 076
- EP-A- 0 569 820
- EP-A- 1 008 493
- DD-A- 280 503

## Beschreibung

Die Erfindung betrifft eine Verkleidungsbaueinheit, die einen Teil der Außenwandung einer Fahrzeugkabine bildet.

Fahrzeugkabinen enthalten im allgemeinen einen Kabinenrahmen, an dem unter anderem Verkleidungsteile, Türen, Klappen und Scheiben befestigt sind. Insbesondere Kabinen für industrielle oder landwirtschaftliche Fahrzeuge weisen häufig einen Überschlagschutzrahmen auf, der auf einer starren Bodenplatte befestigt ist und an dessen hinteren Seitenbereichen Kotflügel befestigt sind. Die Kabinen werden oft komplett vormontiert, indem zwischen den Pfosten des Kabinenrahmens alle erforderlichen Verkleidungsteile, Türen und Fenster eingesetzt werden, so dass das Kabineninnere allseits verschlossen ist. Des weiteren werden der Fahrersitz sowie alle Bedienungselemente und Armaturen eingebaut. Bei der Endmontage des Fahrzeugs wird die komplett vormontierte Kabine auf den Fahrzeugrumpf aufgesetzt. Anschließend werden die erforderlichen mechanischen, elektrischen und hydraulischen Verbindungen zwischen dem Fahrzeug und der Kabine hergestellt.

Viele nicht ständig von der Bedienungsperson zu betätigende elektrische Komponenten, wie Sicherungen, Relais und Controller, die unterschiedliche Aufgaben bei der Fahrzeugsteuerung übernehmen, werden in geeigneten Freiräumen an verschiedenen Orten innerhalb der Kabine untergebracht. Die Wahl dieser Freiräume ist oft schwierig, weil der Innenraum der Kabine möglichst wenig beengt werden soll und weil viele Kabinenbereiche bereits durch verschiedenartige Komponenten belegt sind. Mit der Zunahme der Automatisierung und der damit einhergehenden Zunahme der elektrischen Steuerungselemente wird es immer schwieriger geeignete Freiräume für die elektrischen Komponenten zu finden. Da die elektrischen Komponenten in der Kabine verstreut angeordnet sind, ist ein aufwendiger Verkabelungsaufwand erforderlich, der die Übersichtlichkeit vermindert, Wartungsarbeiten erschwert und Sicherheitsrisiken mit sich bringt.

Dieser Stand der Technik ist in den Dokumenten EP 0 438 076 A, DD 280 503 A, EP 1 008 493 A und EP 0 569 820 beschrieben.

Die der Erfindung zugrunde liegende Aufgabe wird darin gesehen, eine Verkleidungsbaueinheit der eingangs genannten Art anzugeben, durch die die eingangs genannten Probleme überwunden werden. Insbesondere soll die Unterbringung der elektrischen Komponenten vereinfacht und der Verkabelungsaufwand reduziert werden. Für Wartungsarbeiten soll die Anordnung der elektrischen Komponenten übersichtlicher gestaltet werden, und es sollen Sicherheitsrisiken, die sich aus einer unübersichtlichen Anordnung der Komponenten und der Verkabelung ergeben können, vermieden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist die Verkleidungsbaueinheit ein vormontiertes Modul und bildet einen Teil der Außenwandung einer Fahrzeugkabine. Das Modul enthält eine Tragstruktur, an der elektrische Steuerkomponenten befestigt sind, die wenigstens zum Teil durch Verkleidungselemente abgedeckt sind. Bei den elektrischen Komponenten handelt es sich beispielsweise um Controller zur Fahrzeugsteuerung, Sicherungen und Relais. Es ist des weiteren wenigstens ein mit den elektrischen Komponenten verbundener Stecker vorgesehen, durch den sich die elektrischen Komponenten jederzeit lösbar mit entsprechenden Fahrzeugbaugruppen elektrisch verbinden lassen.

Durch die vormontierbare Verkleidungsbaueinheit ist somit eine Öffnung in der Kabinenwandung verschließbar. Die elektrischen Komponenten können auf der Kabineninnenseite oder -außenseite an der Tragstruktur befestigt sein. Durch die Ausbildung der innen- und außenliegenden Verkleidungsteile können optische und technische Anforderungen an die Innenausstattung und an das äußere Erscheinungsbild der Kabine auf einfache Weise erfüllt werden. In die Stecker der Verkleidungsbaueinheit sind entsprechende als Vielfachstecker ausgebildete Kabinenkabelbaumstecker, Motorkabelbaumstecker und Getriebekabelbaumstecker einsteckbar. Durch geeignete Dichtungen auf der Umfangskontur der Verkleidungsbaueinheit lässt sich die Kabine gegen unerwünschte Umwelteinflüsse abdichten.

In der vormontierten Verkleidungsbaueinheit können die bisher in der Fahrzeugkabine verstreut angeordneten elektrischen Komponenten, insbesondere die Controller, in einem gemeinsamen Bauraum zusammengefasst werden. Sie stellt ein vormontierbares Modul dar, das unabhängig von der übrigen Kabine komplett montierbar und auf ihre Funktionsfähigkeit hin überprüfbar ist. Zur Überprüfung lassen sich die Stecker des Moduls mit Steckern eines Prüfstands verbinden. Die Montage der elektrischen Komponenten muss somit nicht am Kabinenmontageband vorgenommen werden, so dass der Ablauf am Band beschleunigt werden und die Überprüfung bzw. eine Fehlersuche vereinfacht werden kann. Die zusammengefasste und übersichtliche Anordnung der elektrischen Komponenten und ihrer Verkabelung erleichtert Wartungs- und Reparaturarbeiten. Fehler, die auf eine unübersichtliche Anordnung der Komponenten zurückzuführen sind und die Sicherheitsrisiken mit sich bringen, lassen sich vermeiden.

Ein besonders bevorzugter Einbauraum für die erfindungsgemäße Verkleidungsbaueinheit ist im Fahrzeugheck gegeben, wobei ihre Tragstruktur an den rückseitigen Kabinenbereich, der beispielsweise bei einem Traktor im wesentlichen zwischen den Hinterradkotflügeln liegt, angepasst ist. Dies bedeutet, dass die Kabinenrückseite unterhalb des Rückfensters zunächst offen ist und durch die Montage der erfindungsgemäßen Verkleidungsbaueinheit verschlossen wird.

Hierbei ist es von besonderem Vorteil, die Tragstruktur zwischen den beiden Hinterradkotflügeln des Fahrzeugs anzuordnen und ihre Umfangskontur an die Kotflügelstruktur anzupassen, so dass im hinteren Bereich keine weiteren Verkleidungsteile erforderlich sind.

Sofern auf der Innenseite der Kotflügel Filtergehäuse angeordnet sind, wie es die EP-A-0 438 076 beschreibt, ist es zweckmäßig die Seitenkanten der Tragstruktur an die Kontur dieser Filtergehäuse anzupassen, um einen abgedichteten Übergang zu schaffen. Die Tragstruktur nimmt an ihrer oberen Kante eine Fensterdichtung auf, die die Heckscheibe trägt und abdichtet.

Eine vorteilhafte Ausbildung der Verkleidungsbaueinheit ergibt sich dadurch, dass im oberen Bereich der Tragstruktur beiderseits vorstehende Flügel vorgesehen sind. Diese Flügel verschließen Kabinenbereiche, die zwischen dem jeweiligen Fahrzeugkotflügel bzw. Filtergehäuse einerseits und dem Kabinenrückfenster andererseits liegen. Der hintere Kabinenbereich lässt sich damit vollständig durch die Verkleidungsbaueinheit und das Kabinenrückfenster verschließen.

Vorzugsweise ist die Verkleidungsbaueinheit im wesentlichen kassettenartig oder schubladenartig ausgebildet, so dass sie sich über Gleitkufen oder dergleichen in die zu verschließende Öffnung der Fahrzeugkabine, gegebenenfalls unter Verwendung eines Montagerobotors, einschieben lässt. Hierfür weist die Tragstruktur zweckmäßigerweise eine im wesentlichen vertikale Kabinenseitenwand und eine im wesentlichen horizontale Kabinenbodenplatte auf. In die Tragstruktur ist damit neben einer Kabinenseitenwand ein Teil des Kabinenbodens integriert.

Es ist vorteilhaft, wenn die Tragstruktur Durchbrechungen zur Durchführung von Leitungen und Kabelbäumen aufweist. Dies erleichtert deren Verlegung. Die Ausbildung kann auf einfache Weise so erfolgen, dass die Durchführungen durch die Montage der Stecker oder der elektrischen Komponenten verschlossen werden, oder dass geeignete Dichtelemente vorgesehen sind. Eine weitere bevorzugte Ausgestaltung der Erfindung sieht vor, dass in die Tragstruktur senkrecht von der Tragstrukturebene vorstehende Begrenzungswandungen integriert sind, durch die gehäuseartige Kammern zur Aufnahme der elektrischen Komponenten gebildet werden. Die Begrenzungswandungen dienen des weiteren zur Versteifung der Tragstruktur.

Eine oder mehrere der durch die Begrenzungswandungen gebildeten auf der Außenseite der Tragstruktur liegenden Kammern lassen sich durch einen Deckel verschließen, der Teil der äußeren Verkleidung ist und die elektrischen Komponenten gegen störende Umwelteinflüsse schützt. Die Innenseite der Tragstruktur wird durch eine Kabinenverkleidung abgedeckt, die einerseits die innenliegenden elektrischen Komponenten schützt und andererseits an die Kabineninnenausstattung angepasst ist.

Für eine Kabinenausbildung, bei der Luftfiltergehäuse in die Kabinenwand integriert sind, welche zum Kabineninneren offene Lüftungskanäle aufweisen, ist es von Vorteil, wenn die als Abdeckung ausgebildete Kabinenverkleidung seitlich über die Tragstruktur übersteht. Mit ihren überstehenden Bereichen deckt die Kabinenverkleidung die Lüftungskanäle ab und enthält hier Luftschlitze durch die für einen Umluftkreis Luft aus dem Kabineninneren angesaugt werden kann.

Eine weitere vorteilhafte Weiterbildung der Erfindung ist darin zu sehen, dass ein Sicherungspanel vorgesehen ist, welches verschwenkbar an der Tragstruktur nach Art einer Serviceklappe gelagert ist, so dass es sich von der Tragstruktur wegklappen lässt. Auf einer Seite oder auf beiden Seiten des tafelförmigen Sicherungspanels können Fahrzeugsicherungen, Relais und dergleichen angeordnet sein. Das klappbare Sicherungspanel erleichtert den Zugang zu den auf dem Sicherungspanel angeordneten und zu den hinter dem Sicherungspanel liegenden Komponenten. Das Sicherungspanel befindet sich vorzugsweise auf der Kabineninnenseite der Tragstruktur und wird durch ein Kabinenverkleidungselement abgedeckt.

Die erfindungsgemäße Verkleidungsbaueinheit bietet insbesondere Platz für die Controller des Fahrzeugs. Moderne Arbeitsmaschinen erfordern für ihre vielseitigen Einsatzgebiete eine Vielzahl von Controllern. Diese lassen sich alle auf der Verkleidungsbaueinheit zusammenfassen. Es handelt sich beispielsweise um einen Motorcontroller zur Steuerung der Antriebsmaschine, einen Getriebecontroller zur Steuerung des Getriebes einen Hubwerkscontroller zur Steuerung der Anbauvorrichtung, einen Gerätecontroller zur Steuerung eines oder mehrerer Anbaugeräte und um weitere Controller die für weitere Funktionen vorgesehen sind. Die Controller sind in Metallgehäusen untergebracht, die die Elektronik hermetisch gegenüber Umwelteinflüssen abdichten und welche abgedichtete Austrittsöffnungen für die zu Kabeln zusammengefassten elektrischen Versorgungs- und Steuerleitungen enthalten.

Vorzugsweise werden die Controller durch eigens auf sie angepasste Kammern der Tragstruktur aufgenommen. Jede Kammer lässt sich z. B. einzeln durch je eine Deckel verschließen. Es ist jedoch vorteilhaft mit einem Deckel mehrere Kammern zu verschließen, um die Montagearbeiten zu erleichtern und Abdichtprobleme zu reduzieren. Die Abdeckung durch Deckel eignet sich besonders für die Kabinenaußenseite. Eine raumsparende Anordnung der Controller ergibt sich dadurch, dass jeweils zwei oder mehr Controller übereinander in einer Kammer angeordnet werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Ansicht einer Traktorkabine von schräg hinten mit erfindungsgemäßer vormontierter Verkleidungsbaueinheit,
- Fig. 2: die Innenseitenansicht einer erfindungsgemäßen Verkleidungsbaueinheit und
- Fig. 3: die Außenseitenansicht einer erfindungsgemäßen Verkleidungsbaueinheit.

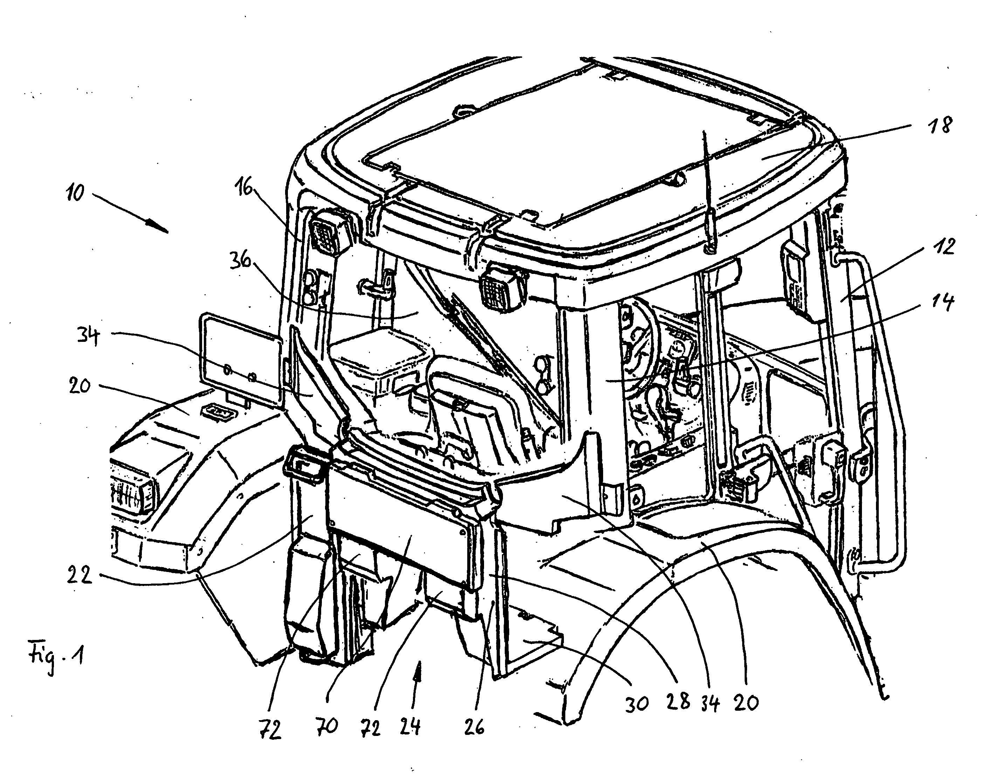

Die in Fig. 1 dargestellte Traktorkabine 10 stellt eine komplett vormontierbare Baueinheit dar, die bei der Endmontage des Traktors auf den Traktorrumpf aufgesetzt und mit diesem verbunden wird. Die Traktorkabine 10 besteht im wesentlichen aus einem 4-Pfosten-Überschlagrahmen, an dessen vier Eckpfosten 12, 14, 16 Verkleidungsteile befestigt sind, die u. a. die Türen und Kabinenscheiben aufnehmen. Die Traktorkabine 10 weist ein Kabinendach 18 und eine nicht dargestellte Bodenplatte auf. In ihrem Heckbereich sind auf jeder Seite je ein Kotflügel 20 befestigt. Auf der Innenseite jedes Kotflügels 20 schließt sich ein Luftfiltergehäuse 22 an, von denen nur das linke dargestellt wurde. Diese Luftfiltergehäuse 22 stehen mit vertikal verlaufenden Luftkanälen im Bereich der hinteren Eckpfosten 14, 16 in Verbindung und sind durch rechteckige Deckel von außen zugänglich, wie es in der EP-A-0 438 076 beschrieben wurde.

Auf der Heckseite der Traktorkabine 10 befindet sich eine Verkleidungsbaueinheit 24, die ein unabhängig von der übrigen Traktorkabine 10 vormontierbares Modul bildet und eine Tragstruktur 26 enthält. Die Tragstruktur 26 ist im wesentlichen L-förmig ausgebildet und weist eine sich vertikal erstreckende Kabinenseitenwand 28 und eine unten an diese angeformte horizontal ausgerichtete Kabinenbodenplatte 30 auf. Die Tragstruktur 26 hat eine sich ins Kabineninnere erstreckende Auswölbung 32, die einen äußeren Freiraum u. a. für eine auf das Fahrzeugdifferentialgehäuse aufgesetzte, nicht dargestellte Hydraulikpumpe bereitstellt. Von jeder Seite des oberen Bereichs der Kabinenseitenwand 28 steht ein Flügel 34 ab. Die Umfangskontur der Tragstruktur 26 ist derart an eine Öffnung auf der Heckseite der Traktorkabine 10 angepasst, dass die seitlichen Kanten der Kabinenseitenwand 28 an den Luftfiltergehäusen 22 anliegen, die Flügel 34 einen Freiraum zwischen den Luftfiltergehäusen 22 und dem Heckfenster 36 verschließen und die Kabinenbodenplatte 30 sich an die übrige Bodenplatte der Traktorkabine 10 anschließt und Teil des Kabinenbodens ist. Zur Abdichtung der Verkleidungsbaueinheit 24 gegenüber der übrigen Traktorkabine 10 werden nicht näher dargestellte übliche Dichtelemente verwendet.

Im Bereich des Kabinenbodens sind nicht dargestellte Gleitschienen vorgesehen, die mit Gleitkufen zusammenwirken, die sich an der Kabinenbodenplatte 30 der Tragstruktur 26 befinden. Dies erlaubt eine einfache Montage der Verkleidungsbaueinheit 24, die sich mit ihren Gleitkufen auf die Gleitschienen aufsetzen und dann nach vorne in die Traktorkabine 10 verschieben lässt, bis die Öffnung im Kabinenheck durch die Tragstruktur 26 verschlossen ist.

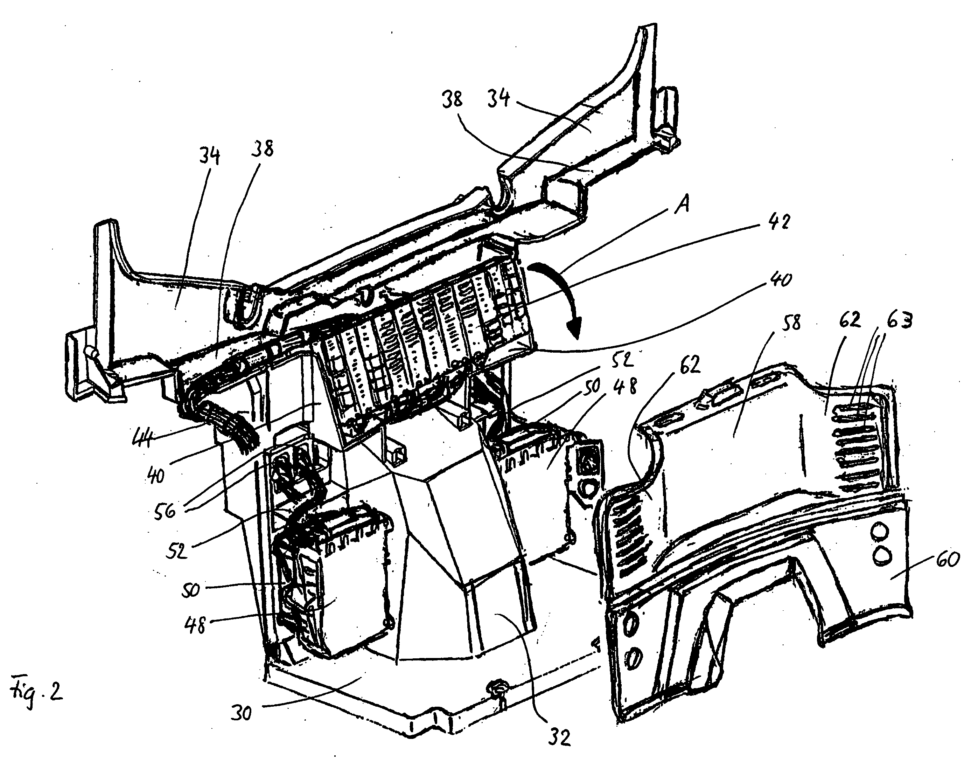

An der aus Fig. 2 hervorgehenden Innenseite der Verkleidungsbaueinheit 24 sind senkrecht von der Kabinenseitenwand 28 der Tragstruktur 26 vorstehende Begrenzungswandungen 38, 40 angeformt, die einerseits der Versteifung der Tragstruktur 28 dienen und andererseits eine Kammer begrenzen, in der ein Sicherungspanel 42 angeordnet ist. Das im wesentlichen ebene Sicherungspanel 42 ist über eine horizontal verlaufende, nicht näher dargestellte Scharnierachse in seinem unteren Bereich an den seitlichen Begrenzungswandungen 40 gelagert und lässt sich nach Art einer Klappe aus der dargestellten Position vorklappen, so dass sich seine obere Kante in Richtung des Pfeils A nach vorne bewegt und einen Zugang zu der hinteren Panelseite und zu dem Raum hinter dem Sicherungspanel 42 freigibt. Auf der vorderen und gegebenenfalls auch auf der hinteren Panelseite sind Sicherungen, Relais und andere elektrische Komponenten angeordnet, die jeweils zu vormontierbaren Baugruppen zusammengefasst sein können, welche Steckkontakte aufweisen, um sie in entsprechende auf dem Sicherungspanel 42 befestigten Steckern einstecken zu können. Diese elektrischen Komponenten stehen über einen oder mehrere Kabelbäume 44 mit einem oder mehreren, nicht näher dargestellten Steckern in Verbindung. Die Stecker lassen sich in entsprechende Kabinenkabelbaumstecker, Motorkabelbaumstecker, Getriebekabelbaumstecker oder andere Stecker einstecken, um Verbindungen zu entsprechenden elektrischen Baugruppen des Fahrzeugs herzustellen.

Auf der Innenseite der Tragstruktur 28 der Verkleidungsbaueinheit 24 sind auf beiden Seiten neben der Auswölbung 32 jeweils zwei übereinander liegende Controller 48, 50 montiert. Es handelt sich hierbei um handelsübliche elektronische Steuereinheiten, die in im wesentlichen quaderförmigen Metallgehäusen untergebracht sind und unterschiedliche Steuerfunktionen des Fahrzeugs ausführen können. Die elektrischen Leitungen 52 der Controller 48, 50 sind mit Steckern 54 verbunden, die in Durchtrittsöffnungen 56 in der Kabinenseitenwand 28 der Tragstruktur 26 eingesetzt sind. In diese Stecker 54 lassen sich entsprechende Vielfachstecker 59 einstecken, welche Verbindungen zu den entsprechenden elektrischen Fahrzeugbaugruppen herstellen.

Die Innenseite der Tragstruktur mit dem Sicherungspanel 42 und den Controllern 48, 50 wird durch ein oberes Verkleidungselement 58 und ein unteres Verkleidungselement 60 abgedeckt, deren Form und optisches Erscheinungsbild an die Kabineninnenausstattung angepasst ist. Die Verkleidungselemente 58, 60 lassen sich auf einfache Weise montieren und demontieren und ermöglichen einen raschen Zugang zu dem Sicherungspanel 42 bzw. den Controllern 48, 50. Die Verkleidungselemente 58, 60 ragen seitlich über die Kabinenseitenwand 28 der Tragstruktur 26 hinaus und erstreckt sich über nicht dargestellte Lüftungsaustrittskanäle der Luftfiltergehäuse 22. In seinen überstehenden Bereichen 62 enthält das obere Verkleidungselement 58 Luftschlitze 63, die einen Lufteintritt aus dem Kabineninneren in das Luftfiltergehäuse 22 erlauben. Auf der in Fig. 2 nichtsichtbaren Rückseite der überstehenden Bereiche 62 sind Umluftfilterelemente über den Luftschlitzen 63 befestigt, beispielsweise aufgeklebt.

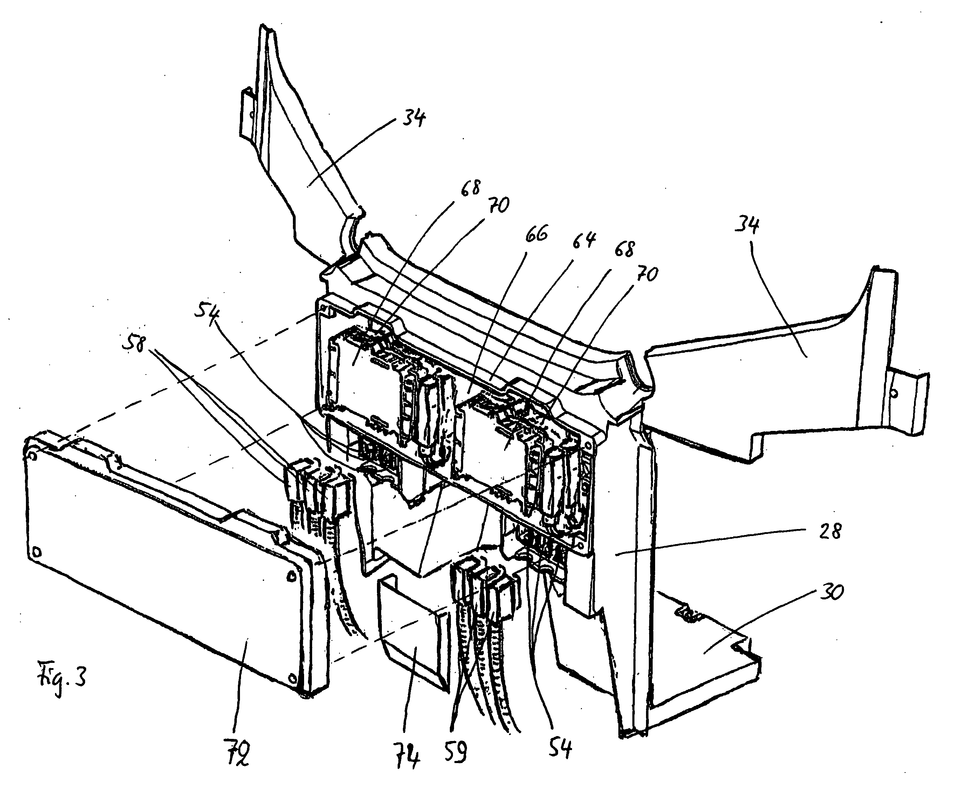

An der aus Fig. 3 hervorgehenden Außenseite der Verkleidungsbaueinheit 24 sind ebenfalls senkrecht von der Kabinenseitenwand 28 der Tragstruktur 26 vorstehende Begrenzungswandungen 64 angeformt, die einerseits der Versteifung der Tragstruktur 26 dienen und andererseits eine Kammer 66 begrenzen, in der jeweils zwei übereinander angeordnete Controller 68, 70 befestigt sind, welche mit einem der genannten Stecker 54 elektrisch verbunden sind. Die durch die Begrenzungswandungen 64 gebildete Kammer 66 ist durch einen Deckel 72 verschließbar, so dass die Controller 68, 70 gegenüber Umwelteinflüssen geschützt sind. Des weiteren sind Deckel 74 vorgesehen, von denen einer dargestellt ist und die über den Steckern 54 und 59 befestigt werden, um diese zu schützen.

## Patentansprüche

1. Vormontierte Verkleidungsbaueinheit (24), die einen Teil der Außenwandung einer Fahrzeugkabine (10) bildet, mit einer Tragstruktur (26), an der wenigstens zum Teil durch Verkleidungselemente (58, 72, 74) abgedeckte elektrische Komponenten (42, 48, 50, 68, 70), wie Controller zur Fahrzeugsteuerung, Sicherungen und Relais, befestigt sind, und mit wenigstens einem mit den elektrischen Komponenten (42, 48, 50, 68, 70) verbundenen Stecker (54), durch den sich die elektrischen Komponenten (42, 48, 50, 68, 70) mit entsprechenden Fahrzeugbaugruppen elektrisch verbinden lassen.

2. Verkleidungsbaueinheit nach Anspruch 1, **dadurch gekennzeichnet, dass** die Tragstruktur (26) an einen rückseitigen Kabinenbereich, der im wesentlichen zwischen den Hinterradkotflügeln (20) des Fahrzeugs liegt, angepasst ist.

3. Verkleidungsbaueinheit nach Anspruch 1 oder 2, **dadurch gekennzeichnet, dass** die Tragstruktur (26) an einen rückseitigen Kabinenbereich, der durch zwei seitliche Filtergehäuse (22) begrenzt ist, angepasst ist.

4. Verkleidungsbaueinheit nach Anspruch 2 oder 3, **dadurch gekennzeichnet, dass** im oberen Bereich der Tragstruktur (26) beiderseits vorstehende Flügel (34) vorgesehen sind, die dem Verschließen eines Bereichs zwischen den Fahrzeugkotflügel (20) und/oder den Filtergehäusen (22) einerseits und dem Kabinenrückfester (36) andererseits dienen.

5. Verkleidungsbaueinheit nach einem der Ansprüche 1 bis 4, **dadurch gekennzeichnet, dass** die Tragstruktur (26) eine im wesentlichen vertikale Kabinenseitenwand (28) und eine im wesentlichen horizontale Kabinenbodenplatte (30) aufweist.

6. Verkleidungsbaueinheit nach einem der Ansprüche 1 bis 5, **dadurch gekennzeichnet, dass** die Tragstruktur (26) Durchbrechungen (56) zur Durchführung von Leitungen (52) und/oder Kabelbäumen aufweist.

7. Verkleidungsbaueinheit nach einem der Ansprüche 1 bis 6, **dadurch gekennzeichnet, dass** in die Tragstruktur (26) senkrecht zur Tragstrukturebene vorstehende Begrenzungswandungen (40, 42, 64) integriert sind, durch die Kammern (66) zur Aufnahme der elektrischen Komponenten (42, 68, 70) gebildet werden.

8. Verkleidungsbaueinheit nach Anspruch 7, **dadurch gekennzeichnet, dass** wenigstens ein als Verkleidungselement dienender Deckel (72) vorgesehen ist, durch den insbesondere wenigstens eine Kammer (66) verschließbar ist.

9. Verkleidungsbaueinheit nach einem der Ansprüche 1 bis 8, **dadurch gekennzeichnet, dass** eine innenliegende Komponenten (42, 48, 50) abdeckende Kabineninnenverkleidung (58) vorgesehen ist.

10. Verkleidungsbaueinheit nach Anspruch 9, **dadurch gekennzeichnet, dass** die Kabineninnenverkleidung (58) seitlich über die Tragstruktur (26) übersteht und dass in den überstehenden Bereichen (62), die der Abdeckung von sich zur Kabineninnenseite öffnenden Luftfiltergehäusen (22) dienen, Luftschlitze (63) eingelassen sind.

11. Verkleidungsbaueinheit nach einem der Ansprüche 1 bis 10, **dadurch gekennzeichnet, dass** ein Sicherungspanel (42) vorgesehen ist, welches verschwenkbar an der Tragstruktur (26) gelagert ist, so dass es sich vorklappen lässt.

12. Verkleidungsbaueinheit nach einem der Ansprüche 1 bis 11, **dadurch gekennzeichnet, dass** mehrere Controller (48, 50, 68, 70) in wenigstens einer Kammer (66) der Tragstruktur (26) angeordnet sind, welche durch einen gemeinsamen Deckel (72) verschließbar sind.

13. Verkleidungsbaueinheit nach einem der Ansprüche 1 bis 12, **dadurch gekennzeichnet, dass** jeweils wenigstens zwei Controller (48, 50; 68, 70) übereinander angeordnet sind.

## Claims

1. A pre-assembled panel unit (24) which forms part of the outer walls of a vehicle cab (10), with a support structure (26) on which there are fixed electrical components (42, 48, 50, 68, 70), such as controllers for control of the vehicle, fuses and relays, which are at least partially covered by panel elements (58, 72, 74), and with at least one connector (54) connected to the electrical components (42, 48, 50, 68, 70) and through which the electrical components (42, 48, 50, 68, 70) can be connected electrically to corresponding vehicle units.

2. A panel unit according to claim 1, **characterized in that** the support structure (26) is matched to a rearward cab region which lies substantially between the rear wheel mudguards (20) of the vehicle.

3. A panel unit according to claim 1 or 2, **characterized in that** the support structure (26) is matched to a rearward cab region which is bounded by two lateral filter housings (22).

4. A panel unit according to claim 2 or 3, **characterized in that** projecting wings (34) are provided on both sides in the upper region of the support structure (26) and serve to close a region between on the one hand the vehicle mudguards (20) and/or the filter housings (22) and on the other hand the cab rear window (36).

5. A panel unit according to any of claims 1 to 4, **characterized in that** the support structure (26) comprises a substantially vertical cab sidewall (28) and a substantially horizontal cab floor plate (30).

6. A panel unit according to any of claims 1 to 5, **characterized in that** the support structure (26) has apertures (56) for passage of lines (52) and/or cable harnesses.

7. A panel unit according to any of claims 1 to 6, **characterized in that** bounding walls (40, 42, 64) standing perpendicular to the support structure plane are integrated in the support structure (26), through which chambers (66) for reception of the electrical components (42, 68, 70) are formed.

8. A panel unit according to claim 7, **characterized in that** at least one cover (72) serving as a panel element is provided, through which in particular at least one chamber (66) can be closed.

9. A panel unit according to any of claims 1 to 8, **characterized in that** a cab interior panel (58) is provided, covering components (42, 48, 50) lying inside.

10. A panel unit according to claim 9, **characterized in that** the cab interior panel (58) projects laterally beyond the support structure (26) and **in that** air slots (63) are formed in the projecting regions (62) which serve to cover air filter housings (22) opening to the cab interior.

11. A panel unit according to any of claims 1 to 10, **characterized in that** a fuse panel (42) is provided and is mounted pivotally on the support structure (26), so that it can be hinged out.

12. A panel unit according to any of claims 1 to 11, **characterized in that** a plurality of controllers (48, 50, 68, 70) are provided in at least one chamber (66) of the support structure (26), which can be closed by a common cover (72).

13. A panel unit according to any of claims 1 to 12, **characterized in that** at least two controllers (48, 50; 68, 70) are arranged one over the other.

## Revendications

1. Ensemble de carrosserie pré-assemblé (24) formant une partie de la paroi extérieure de la cabine d'un véhicule (10), présentant une structure porteuse (26) sur laquelle sont fixées au moins en partie par des éléments de carrosserie (58, 72, 74) des composants électriques recouvertes tels que des unités de commandes pour la commande du véhicule, des fusibles et des relais, et au moins une prise (54) reliée aux composants électriques (42, 48, 50, 68, 70) par l'intermédiaire de laquelle les composants électriques (42, 48, 50, 68, 70) peuvent être connectés électriquement avec des groupes d'assemblage du véhicule.

2. Ensemble de carrosserie selon la revendication 1, **caractérisé en ce que** la structure porteuse (26) est adaptée à une zone de cabine arrière qui se trouve essentiellement entre les ailes arrières (20) du véhicule.

3. Ensemble de carrosserie selon la revendication 1 ou 2, **caractérisé en ce que** la structure porteuse (26) est adaptée à une zone de cabine arrière qui est délimitée par deux logements de filtres latéraux (22).

4. Ensemble de carrosserie selon la revendication 2 ou 3, **caractérisé en ce que** dans la zone supérieure de la structure porteuse (26) sont prévues des deux côtés, des ailes proéminentes (34) qui servent à fermer une zone comprise entre les ailes du véhicule (20) et/ou le logement de filtres (22) d'une part et la fenêtre arrière de la cabine (36) d'autre part.

5. Ensemble de carrosserie selon l'une quelconque des revendications 1 à 4, **caractérisé en ce que** la structure porteuse (26) présente une paroi de cabine essentiellement verticale (28) et un plancher de cabine essentiellement horizontal (30).

6. Ensemble de carrosserie selon l'une quelconque des revendications 1 à 5, **caractérisé en ce que** la structure porteuse (26) présente des perforations (56) pour introduire des lignes (52) et/ou des faisceaux de câbles.

7. Ensemble de carrosserie selon l'une quelconque des revendications 1 à 6, **caractérisé en ce que**, dans la structure porteuse (26), perpendiculairement au plan de la structure porteuse, sont intégrées des parois de délimitation proéminentes (40, 42, 64), formées par les chambres (66) de réception des composants électriques (42, 68, 70) .

8. Ensemble de carrosserie selon la revendication 7, **caractérisé en ce que** au moins un capot (72) servant d'élément de carrosserie est prévu, par lequel au moins une chambre en particulier (66) peut être fermée.

9. Ensemble de carrosserie selon l'une quelconque des revendications 1 à 8, **caractérisé en ce qu'**une carrosserie interne de cabine (58) recouvrant les composants intérieures (42, 48, 50) est prévue.

10. Ensemble de carrosserie selon la revendication 9, **caractérisé en ce que** la carrosserie intérieure de la cabine (58) dépasse latéralement de la structure porteuse (26) et que dans les zones proéminentes (62) qui servent à recouvrir les logements de filtre à air (22) ouverts vers l'intérieur de la cabine, des grilles de ventilation (63) sont encastrées.

11. Ensemble de carrosserie selon l'une quelconque des revendications 1 à 10, **caractérisé en ce qu'**un panneau de sécurité (42), placé de manière à basculer sur la structure porteuse (26) est prévu de sorte qu'il puisse être rabattu.

12. Ensemble de carrosserie selon l'une quelconque des revendications 1 à 11, **caractérisé en ce que** plusieurs unités de commande (48, 50, 68, 70), qui peuvent être fermées par un couvercle commun (72), sont aménagées dans au moins une chambre (66) de la structure porteuse (26).

13. Ensemble de carrosserie selon l'une quelconque des revendications 1 à 12, **caractérisé en ce que** au moins deux unités de commande (48, 50, 68, 70) sont placées respectivement l'une au-dessus de l'autre.
